# EUROPÄISCHE PATENTANMELDUNG

(11) **EP 0 545 282 A1**
(43) Veröffentlichungstag der Anmeldung: **09.06.1993**
(21) Anmeldenummer: 92120172.9
(22) Anmeldetag: 26.11.1992
(51) Int. Cl.: C08L 23/06, C08K 7/06

(54) **Formmassen aus ultrahochmolekularem Polyethylen**

(30) Priorität: 05.12.1991 DE 4140061
(71) Anmelder: HOECHST AKTIENGESELLSCHAFT, D-65926 Frankfurt am Main (DE)
(72) Erfinder: Raetz, Michael, Dipl.-Ing., W-4300 Essen (DE); Kellersohn, Rudolf, Dipl.-Ing., W-4236 Hamminkeln (DE); Payer, Wolfgang, Dr. Dipl.-Chem., W-4230 Wesel (DE)

(57) **Zusammenfassung**

Gegenstand der Erfindung sind Formmassen aus ultrahochmolekularem Polyethylen mit einer mittleren Molmasse von mindestens 2,5 x 10⁶ g/mol und Kohlenstoffmikrofasern auf Basis von Pech.

## Beschreibung

Die Erfindung betrifft ultrahochmolekulares Polyethylen und Kohlenstoffmikrofasern enthaltende Formmassen und ein Verfahren zu ihrer Herstellung. Die neuen Formmassen zeichnen sich durch einen hohen Elastizitätsmodul bei hervorragenden Festigkeitswerten aus.

Lineare Polyethylene mit einer mittleren Molmasse von mindestens 2,5 x 10⁶ g/mol und bis zu 1 x 10⁷ g/mol werden als ultrahochmolekulare Polyethylene (PE-UHMW) bezeichnet. Die vorstehend genannten Molmassen werden viskosimetrisch ermittelt. Ein Verfahren zu ihrer Bestimmung ist z.B. in CZ-Chemische Technik 4 (1974), 129 ff beschrieben.

PE-UHMW besitzt eine Reihe günstiger physikalischer und chemischer Eigenschaften. Hervorzuheben sind sein hoher Verschleißwiderstand` sein niedriger Reibungskoeffizient gegenüber anderen Werkstoffen, sein ausgezeichnetes Zähigkeitsverhalten und seine bemerkenswerte Beständigkeit gegenüber Chemikalien.

Außer durch Variation der Molmasse lassen sich die Eigenschaften von PE-UHMW unter anderem auf chemischem Wege, z.B. durch Vernetzen unter der Einwirkung Radikale bildender Substanzen oder durch Zusatz von Füllstoffen beeinflussen und speziellen Verwendungszwecken anpassen.

So berichtet die veröffentlichte japanische Patentanmeldung 85/177047 (vgl. C.A. 104, 69975 e) über Formkörper, die je 100 Teile PE-UHMW 5 bis 100 Teile anorganische Fasern enthalten. Als Beispiel wird eine Masse aus 100 Teilen ultrahochmolekularem Polyethylen und 80 Teilen einer Schwefelfaser beschrieben. Die Werkstoffe sollen einen geringen linearen Ausdehnungskoeffizienten und hohen Widerstand gegen Biegebeanspruchung bei erhöhter Temperatur besitzen.

Gegenstand der veröffentlichten japanischen Patentanmeldung 85/9723 (vgl. C.A. 102, 186211 x) sind Formmassen aus PE-UHMW, das mit anorganischen Partikeln, z.B. Kohlenstoffasern, verstärkt ist. Das Material wird durch Spritzgießen zu Getrieben hoher Präzision und mit geringer Formschwindung verarbeitet.

Die DE 27 00 621 A1 betrifft bis zu etwa 30 Gew.-% Graphitfasern enthaltendes PE-UHMW, dessen Molmasse größer als etwa 1,5 Millionen g/mol ist und vorzugsweise von etwa 2 Millionen bis etwa 4 Millionen g/mol reicht. Es wird zur Herstellung von Körperimplantaten eingesetzt. Im Gegensatz zu reinem PE-UHMW ist das Material nicht kaltfließend und daher formbeständig.

In der WO 85/04887 werden faserverstärkte Formmassen aus ultrahochmolekularen Polymeren, darunter auch Polyethylen, beschrieben. Als Fasermaterial werden Bor, Glas, Graphit, Quarz, Metall und insbesondere Polyaramid genannt. Der Werkstoff ist verschleißfest, selbstschmierend, kriecht nur wenig und kann z.B. zur Herstellung von Kolbenringen und Dichtungen verwendet werden.

Weiterhin ist bekannt, durch Modifizieren mit Füllstoffen den Elastizitätsmodul von PE-UHMW anzuheben. Allerdings erfordert die Erhöhung des Elastizitätsmoduls auf Werte, die für den Einsatz des Werkstoffes in der Praxis verlangt werden, Füllstoffanteile in der Formmasse oberhalb etwa 20 Gew.-%. Derartige Konzentrationen führen aber zu einer deutlichen Verschlechterung des Festigkeitsverhaltens des Materials, in vielen Fällen ist es auch nicht möglich, die Füllstoffe homogen in das PE-UHMW einzumischen.

Es bestand daher die Aufgabe, eine PE-UHMW/Füllstoff-Kombination zu entwickeln, die einen hohen Elastizitätsmodul mit guten Festigkeitswerten verbindet.

Diese Aufgabe wird gelost durch Formmassen, die 70 bis 95 Gew.-% Polyethylen mit einer viskosimetrisch ermittelten mittleren Molmasse von mindestens 2,5 x 10⁶ g/mol, 5 bis 30 Gew.-% einer Kohlenstoffmikrofaser auf Basis von Pech und gegebenenfalls übliche Zusatzstoffe enthalten.

Überraschenderweise zeichnen sich die erfindungsgemäßen Formmassen gegenüber reinem PE-UHMW durch einen um mehr als 100 % erhöhten Elastizitätsmodul aus bei nach wie vor guten Festigkeitswerten, insbesondere hoher Zugfestigkeit, hoher Reißfestigkeit und hoher Reißdehnung.

Als Polyethylenkomponente der neuen Formmassen setzt man Polymerisate mit viskosimetrisch ermittelten Molmassen von mindestens 2,5 x 10⁶ g/mol, vorzugsweise 3 x 10⁶ bis 6 x 10⁶ g/mol und insbesondere 3,5 x 10⁶ bis 5,0 x 10⁶ g/mol ein. Derartige Polymerisate können nach verschiedenen Verfahren durch Niederdruckpolymerisation hergestellt werden. Bewährt hat sich ein Prozeß, der mit Mischkatalysatoren aus Titan(III)-halogeniden und aluminiumorganischen Verbindungen arbeitet; er ist in der DE 23 61 508 beschrieben.

Kohlenstoffmikrofasern können aus verschiedenen Rohstoffen hergestellt werden, z.B. aus Polyacrylnitril, aus Viskoseseide oder Ligninen. Erfindungsgemäß verwendet man Fasern aus anisotropem Pech (auch Mesophasenpech genannt). Sie werden aus synthetischem Pech, das sich z.B. von Petrolpech, Kohlenpech, Naphthalin oder Tetrabenzophenazin ableitet, durch thermische Behandlung bei 350 bis 600°C erhalten, wobei sich die Mesophase bildet. Anschließend wird das die Mesophase enthaltende Pech zu Pechfasern versponnen. Nach einem bekannten Verfahren (DE 32 09 033 A1) geht man z.B. von Mesophasenpech mit einer Viskosität von 1,0 bis 10,0 Pa x s aus, das bei 330 bis 450°C in einer rotierenden Zentrifugalspinnmaschine versponnen wird. Darauf setzt man die erhaltenen Fasern bei Temperaturen von 280 bis 400°C einem Gasstrom aus, der mit einer linearen Geschwindigkeit von 50 bis 200 m/sec in Spinnrichtung strömt und macht sie durch Erhitzen auf 200 bis 400°C in oxidierender Atmosphäre unschmelzbar. Schließlich verkohlt man sie bei 800 bis 1500°C in Stickstoff, um die Kohlenstoffmikrofasern zu erhalten.

Die erfindungsgemäß eingesetzen Kohlenstoffmikrofasern können dem PE-UHMW in hohen Konzentrationen zugemischt werden. Selbst Anteile von mehr als 50 Gew.-% Mikrofaser (bezogen auf die Formmasse) ergeben homogene Produkte. Unter Berücksichtigung der angestrebten Materialeigenschaften, der Herstellung und der Verarbeitbarkeit des neuen Materials empfiehlt es sich, die Mikrofaserkonzentration auf Werte von 3 bis 30 Gew.-%, vorzugsweise 5 bis 20 Gew.-% und insbesondere 10 bis 20 Gew.-%, jeweils bezogen auf die Formmasse, einzustellen.

Neben den Hauptbestandteilen können die Formmassen noch übliche Zusatzstoffe enthalten. Hierzu gehören insbesondere Additive, die das PE-UHMW gegen Wärme-, Licht- und Oxidationseinflüsse schützen. Für diese Zwecke haben sich folgende Verbindungen allein oder in Kombination bewährt: 4,4'-Thiobis-(3-methyl-6-tertiärbutylphenol-1), Dilaurylthiodipropionat, Distearyl-thio-dipropionat, Tetrakis-[methylen-(3,5-ditertiärbutyl-4-hydroxy-hydrocinnamat)] methan, n-Octadecyl-β-(4'-hydroxy-3,5'-ditertiärbutylphenyl)-propionat, Bis-[3,3-bis(hydroxy-3'-tertiärbutylphenyl)-butansäure]-glykolester. Sie werden im allgemeinen in Mengen von 0,1 bis 0,2 Gew.-%, bezogen auf die Gesamtmischung, zugegeben.

Die neuen Formmassen besitzen je nach Gehalt an Kohlenstoffmikrofasern einen Elastizitätsmodul von 1000 bis 2400 MPa. Er beträgt z.B. bei einem Anteil von 10 Gew.-% Kohlenstoffasern 1500 MPa und bei einem Anteil von 20 Gew.-% 1900 MPa. Die Zugfestigkeit liegt im Bereich von 23 bis 26 N/mm², die Reißfestigkeit im Bereich von 30 bis 35 N/mm² und die Reißdehnung beträgt 100 bis 340 %.

Die Herstellung der erfindungsgemäßen Formmassen erfolgt durch homogene Mischung der Ausgangsmaterialien PE-UHMW, Kohlenstoffmikrofaser und gegebenenfalls Additive in einem geeigneten Mischer und anschließendes Sintern des Gemisches unter Druck bei Temperaturen von 180 bis 250°C, insbesondere 200 bis 230°C. Der Sinterdruck beträgt 3 bis 5 MPa, insbesondere 4 bis 5 MPa. Auch das Abkühlen wird unter Druck vorgenommen, bewährt haben sich 7 bis 10 MPa, vorzugsweise 8 bis 10 MPa. Sinter- und Kühlzeit hängen von der Materialdicke und dem Füllstoffgehalt ab. So beträgt die Sinterzeit z.B. für eine 20 mm dicke Platte etwa 2 Stunden.

Das neue Material läßt sich in üblicher Weise mechanisch bearbeiten, z.B. Bohren, Fräsen und Sägen, es kann durch Pressen geformt werden.

Hauptanwendungsgebiete sind Maschinenbau und Fördertechnik (Gleitlager, Gleitleisten u.ä.).

Die Erfindung wird in den folgenden Beispielen näher erläutert. Sie ist jedoch nicht auf diese Ausführungsformen beschränkt.

### Beispiel I

95 Gew.-Teile eines PE-UHMW mit einer Molmasse von 3,5 x 10⁶ g/mol und 5 Gew.-Teile einer Kohlenstoffmikrofaser auf Pechbasis mit einer Länge von 130 µm und einem Durchmesser von 14,5 µm werden in einem Labormischer homogen vermischt. Diese Mischung wird anschließend in einer geeigneten Form bei Temperaturen von 200°C unter einem Druck von 5 MPa gesintert und bei einem Druck von 10 MPa abgekühlt.

Aus der so erhaltenen Platte werden Probekörper zur Messung der Festigkeitswerte nach DIN 53 455 hergestellt.

Die Ergebnisse sind in Tabelle 1 zusammengestellt.

**Tabelle 1**

| | | |
|---|---|---|
| Streckspannung, | N/mm² | 23,1 |
| Reißfestigkeit, | N/mm² | 34,8 |
| Reißdehnung, | % | 327 |
| Elastizitätsmodul, | N/mm² | 1085 |

### Beispiel II

80 Gew.-Teile eines PE-UHMW mit einer Molmasse von 5 x 10⁶ g/mol und 20 Gew.-Teile einer Kohlenstoffmikrofaser auf Pechbasis mit einer Länge von 700 µm und einem Durchmesser von 18 µm werden, wie in Beispiel I beschrieben, verarbeitet.

Die Ergebnisse sind in Tabelle 2 zusammengestellt.

**Tabelle 2**

| | | |
|---|---|---|
| Streckspannung, | N/mm² | 24,0 |
| Reißfestigkeit, | N/mm² | 34,3 |
| Reißdehnung, | % | 140 |
| Elastizitätsmodul, | N/mm² | 1900 |

## Patentansprüche

1. Formmassen enthaltend 70 bis 95 Gew.-% Polyethylen mit einer viskosimetrisch gemessenen mittleren Molmasse von mindetens 2,5 x 10⁶ g/mol, 5 bis 30 Gew.-% einer Kohlenstoffmikrofaser auf Basis von Pech und gegebenenfalls übliche Zusatzstoffe.

2. Formmassen nach Anspruch 1, dadurch gekennzeichnet, daß das Polyethylen eine mittlere Molmasse von 3 x 10⁶ bis 6 x 10⁶ g/mol und insbesondere von 3,5 x 10⁶ bis 5,0 x 10⁶ g/mol besitzt.

3. Formmassen nach Anspruch 1 oder 2, dadurch gekennzeichnet, daß die Kohlenstoffmikrofasern aus Mesophasenpech mit einer Viskosität von 1,0 bis 10,0 Pa x s erhalten wurden.

4. Formmassen nach einem oder mehreren der Ansprüche 1 bis 3, dadurch gekennzeichnet, daß die Mikrofaser-Konzentration 3 bis 30 Gew.-%, insbesondere 10 bis 20 Gew.-%, jeweils bezogen auf die Formmasse, beträgt.

5. Formmassen nach einem oder mehreren der Ansprüche 1 bis 4, dadurch gekennzeichnet, daß sie 0,1 bis 0,2 Gew.-% Zusatzstoffe enthalten.

6. Verfahren zur Herstellung der Formmassen nach einem oder mehreren der Ansprüche 1 bis 5, dadurch gekennzeichnet, daß ultrahochmolekulares Polyethylen, Kohlenstoffmikrofaser und gegebenenfalls Zusatzstoffe gemischt und anschließend unter Drücken von 3 bis 5 MPa bei Temperaturen von 180 bis 250°C gesintert werden und das Sinterprodukt unter einem Druck von 7 bis 10 MPa abgekühlt wird.

7. Verfahren zur Herstellung der Formmasse nach Anspruch 6, dadurch gekennzeichnet, daß der Sinterdruck 4 bis 5 MPa und die Sintertemperatur 200 bis 230°C beträgt und die Abkühlung unter einem Druck von 8 bis 10 MPa erfolgt.
